# FASCICULE DE BREVET EUROPEEN

(11) **EP 2 423 167 B1**
(45) Date de publication et mention de la délivrance du brevet: **05.06.2013**
(21) Numéro de dépôt: 11006946.5
(22) Date de dépôt: 25.08.2011
(51) Int. Cl.: C02F 1/00

(54) **Dispositif de filtration amovible, notamment pour un récipient tel qu'une bouteille**
Abnehmbare Filtervorrichtung, insbesondere für einen Behälter wie etwa eine Flasche
Removable filtering device, in particular for a container such as a bottle

(30) Priorité: 26.08.2010 FR 1003452
(43) Date de publication de la demande: 29.02.2012
(73) Titulaire: MARCONI, Pierre, 06270 Villeneuve Loubet (FR)
(72) Inventeur: MARCONI, Pierre, 06270 Villeneuve Loubet (FR)
(74) Mandataire: Schuffenecker, Thierry

(56) Documents cités:
- FR-A1- 2 894 244
- GB-A- 1 373 056
- GB-A- 191 006 410
- JP-A- 2000 060 730
- US-B1- 6 733 669
- US-B1- 7 473 362

## Description

### Domaine technique de l'invention

La présente invention concerne un dispositif de filtration d'eau, et en particulier un dispositif de filtration amovible pour un récipient tel qu'une bouteille.

### Etat de la technique

Le marché des carafes filtrantes est en net développement. On rappelle qu'une carafe filtrante se compose, en général, d'un corps principal doté d'un couvercle et faisant office de réservoir principal pour le stockage de l'eau. Le corps de la carafe comporte en outre un réservoir secondaire destiné à recevoir de l'eau en attente de traitement associé à un filtre ou un cartouche filtrante pour l'épuration de l'eau située dans le réservoir secondaire.

Les carafes filtrantes sont efficaces. Néanmoins, elles sont en général volumineuses, ne sont pas hermétiques et, surtout, ne conviennent que pour un usage au domicile de l'utilisateur. En outre, l'eau disposée dans le réservoir secondaire est traitée en une seule fois; le chlore étant éliminé, ce qui exige que l'eau filtrée soit consommée rapidement pour éviter le développement des bactéries.

De telles carafes sont, par conséquent, pas adaptées à un usage nomade, hors du domicile.

On connaît déjà un certain nombre de solutions permettant de réaliser des bouteilles filtrantes pour un usage nomade.

Par exemple le brevet américain US 4,151,092 intitulé « *Portable Water filter* » décrit un filtre comportant un premier conteneur de forme cylindrique destiné à recevoir de l'eau à purifier, une cartouche filtrante et un second conteneur cylindrique pour recueillir l'eau purifiée. L'opération de purification d'eau est réalisée par une opération « de pompage » manuel résultant de l'insertion téléscopique du second conteneur au sein du premier conteneur.

Le brevet américain US 4,477,347 intitulé «*Portable Water Purifier*» décrit un purificateur d'eau portable comportant un contenant doté d'un filtre amovible, d'une chambre comportant de l'eau à purifier et d'un système de pompe disposé sur le haut du purificateur.

Le brevet américain US 5,417,860 décrit un dispositif de filtration que l'on insère dans le goulot d'une bouteille contenant de l'eau à traiter.

Le brevet américain US 5,431,813 décrit une bouteille dotée, dans sa partie supérieure, d'un système de filtration.

Le brevet US 5,840,185 est un autre exemple d'une cartouche filtrante destinée à être disposée sur l'encolure d'un récipient, telle qu'une bouteille.

Le brevet américain US 6,136,189 décrit un mécanisme de filtration disposé à l'intérieur d'une bouteille.

Le brevet GB 1 373 056 décrit une carafe de filtration comportant un réservoir pour l'eau à filter et une paroi verticale avec des orifices dans sa partie basse. De l'autre côté de la paroi, est disposé un réservoir de stockage au dessus du filtre. Quand de l'eau filtrée dans le réservoir de stockage 11 est versée par l'orifice de vidange en haut, l'eau à filtrer entre de nouveau du réservoir dans le filtre par les orifices et remplit le réservoir de stockage.

Toutes ces solutions connues présentent certains avantages mais ne permettent pas une distribution d'eau filtrée « à la demande » , en préservant l'eau filtrée du développement des bactéries, et le tout dans une réalisation simple et peu onéreuse à fabriquer.

Tel est le problème à résoudre par la présente invention.

### Exposé de l'invention

La présente invention a pour but de proposer un dispositif de filtration pour un récipient ou conteneur, tel qu'une bouteille par exemple, permettant une distribution d'eau filtrée au dernier moment, c'est à dire juste avant sa consommation immédiate par l'utilisateur.

Un autre but de la présente invention consiste à proposer un dispositif de filtration évitant la prolifération des bactéries au sein de l'eau filtrée.

C'est un autre but de la présente invention que de fournir un dispositif de filtration amovible pour des récipients divers, permettant de contrôler la filtration ou l'arrêt de la filtration.

L'invention réalise ces buts au moyen d'un dispositif de filtration comportant :
- un récipient comportant un élément inférieur et un élément supérieur doté d'un orifice de vidange, l'élément supérieur pouvant être fixé de manière étanche sur l'élément inférieur de manière à constituer un récipient fermé qui pourra présenter, par exemple, la forme d'une bouteille. Le dispositif comporte un système de filtration interne comprenant :
- un réservoir doté d'un orifice dans sa partie supérieure permettant l'écoulement de son contenu lorsque le récipient est penché vers la gauche (ou alternativement vers la droite pour les gauchers)
- un filtre ;
- un support-filtre destiné à recevoir de manière le filtre et le réservoir ;
- un élément de structure coopérant avec le support-filtre de manière à délimiter un volume intermédiaire permettant de recueillir le liquide à la suite de l'écoulement par le dit orifice, l'élément de structure comportant en outre un canal d'écoulement du liquide de bas vers le haut.

Le système de filtration interne est disposé à l'intérieur du récipient de manière à permettre la collecte du liquide filtré après le passage dans le filtre.

Dans un mode de réalisation particulier, le réservoir interne comporte en outre un réceptacle pour le maintien de thé ou d'herbes à infusion utilisables lors de la collecte d'eau filtrée dans la partie inférieur du récipient.

De préférence, le récipient présente la forme d'une bouteille dotée d'un goulot avec son bouchon, et l'élément de structure présente une forme cylindrique, le canal d'écoulement de l'élément de structure étant délimité par une double cloison interne et externe.

Dans un mode de réalisation particulier, le réservoir et le filtre sont tous-deux de forme cylindrique et le support-filtre est de forme circulaire adaptée à la section interne de l'élément de structure. Le support-filtre présente en outre deux orifices circulaires permettant respectivement de venir recevoir la tête supérieure du filtre et le corps du réservoir, l'ensemble formé par l'élément de structure, le support-filtre, le filtre et le réservoir délimitant ledit volume intermédiaire.

Dans un mode de réalisation particulier, le support-filtre peut être disposé à des hauteurs variables prédéfinies.

De préférence, le dispositif comporte un système de décompte de l'utilisation du filtre.

Le dispositif peut présenter des formes quelconques, par exemple la forme d'un flacon, d'une cannette, ou tout simplement la forme d'une bouteille.

### Description des dessins

D'autres caractéristiques, but et avantages de l'invention apparaîtront à la lecture de la description et des dessins ci-après, donnés uniquement à titre d'examples non limitatifs. Sur les dessins annexés :
Les figures 1 a et 1b illustrent un mode de réalisation d'un dispositif de filtration conforme à la présente invention.
La figure 2 représente une vue schématique des différents éléments constitutifs du mode de réalisation des figures 1 a et 1 b, en situation.
Les figures 3a, 3b , 3c et 3d illustrent les divers flux lors de l'utilisation du dispositif des figures 1a et 1 b.
Les figures 4a , 4b, 4c et 4d illustrent un autre modes de réalisation, permettant la préparation d'une infusion ou de thé à partir de l'eau filtrée.

### Description d'un mode de réalisation préféré

L'on décrit à présent un mode de réalisation particulier de l'invention, lequel est adapté à la réalisation d'une bouteille dotée d'un dispositif de filtration autonome et amovible permettant la distribution « à la demande » d'eau purifiée.

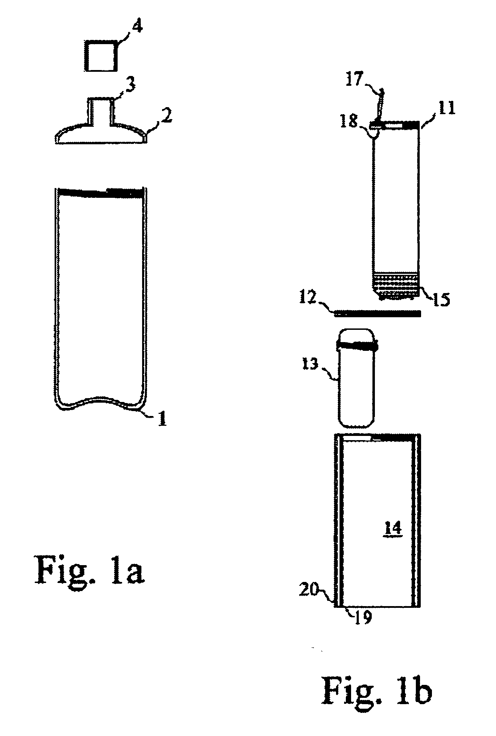

La figure 1 a illustre ainsi une bouteille composée de deux éléments: un élément inférieur 1 et un élément supérieur 2.

L'élément inférieur 1 présente la forme bien connue d'une bouteille, d'une carafe (de forme Ricard® - marque déposée), d'une cannette de grande contenance , ou tout autre récipient permettant de collecter l'eau filtrée et de recevoir le système de filtration décrit ci-après.

Dans le mode de réalisation préféré, l'élément inférieur est doté, dans sa partie supérieure, d'un filetage permettant le vissage de l'élément supérieur 2.

L'élément supérieur 2 présente, dans le mode de réalisation qui est illustré dans la figure 1 a la forme de la partie supérieure d'une bouteille, avec son goulot 3 et son bouchon à vis 4 .

Lorsque les deux éléments 1 et 2 sont joints, ils forment un récipient ayant la forme d'une bouteille parfaitement étanche. En revanche, lorsque les éléments 1 et 2 sont détachés, l'on dispose d'un accès aisé au système de filtration interne, que l'on décrit à présent en relation avec la figure 1 b.

Le dispositif de filtration comporte un réservoir interne 11 destiné à recevoir de l'eau non traitée et dotée de préférence d'une capsule de fermeture 17.

Le réservoir 11 comporte, dans sa partie supérieure gauche, un orifice permettant - dès lors que la bouteille est penchée vers « la gauche » - l'écoulement par gravité de l'eau contenue dans le corps du réservoir 11 pour la collecter au sein d'un volume intermédiaire 16 mentionné plus en détail ci-après, pour y être ensuite immédiatement filtrée.

Dans un mode de réalisation particulier, le réservoir 11 comporte en outre, à titre optionnel, un réceptacle 15 « clipsable » ou pouvant être fixé par tout moyen approprié et destiné à recevoir une dose de thé ou d'herbes aromatiques ou à infuser, afin de permettre, le cas échéant, la préparation d'une boisson aromatique, d'une infusion ou, tout simplement, de thé.

Le dispositif de filtration comporte en outre un filtre 13 qui pourra être tout filtre ou cartouche filtrante commercialisés par un fabriquant. La figure 1b illustre l'utilisation d'un filtre de forme cylindrique.

Le dispositif de filtration comporte en outre un support-filtre 12 pour le maintien du réservoir 11 et du filtre 13, ainsi qu'un élément de structure 14 présentant une forme adaptée à celle de l'élément inférieur 1 de la bouteille.

Dans le mode de réalisation représenté dans la figure 1b, l'élément de structure 14 présente une forme cylindrique, un couvercle supérieur doté d'une ouverture permettant le passage et le maintien du réservoir 11, et deux parois, respectivement interne 19 et externe 20 venant délimiter un canal cylindrique pour l'écoulement de l'eau traité, de bas en haut lorsque l'on penche la bouteille.

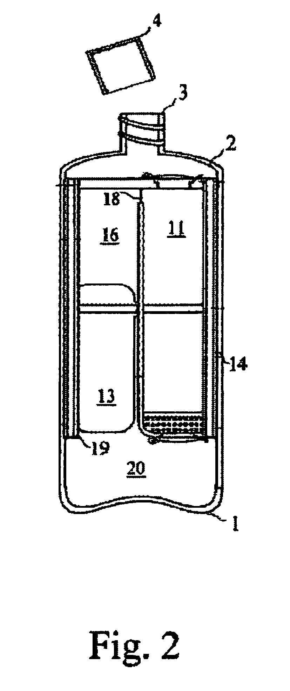

Lorsque le réservoir 11 et le filtre 13 sont maintenus en place par le support filtre 12, ce dernier coopère avec l'élément de structure 14 de manière à délimiter, comme on le voit dans la figure 2, un réservoir ou volume intermédiaire 16 permettant de recueillir l'eau s'étant écoulé depuis le réservoir 11 au travers de l'orifice 18 lorsque l'on penche la bouteille vers la gauche.

A cet effet, le support filtre 12 présente une forme circulaire, adaptée à la section de l'élément de structure 14, de manière à permettre la constitution d'un volume étanche. De préférence, le support-filtre 12 présente une surface adaptée à la section du cylindre constitué par la paroi interne de l'élément de structure 14. Un élément de fixation (non représenté dans la figure), telle qu'un bossage ou une rainure sur l'élément de structure 14 permet le maintien en place du support-filtre 12.

Par ailleurs, le support-filtre 12 est doté de deux ouvertures, en général de forme circulaire, adaptée pour recevoir, respectivement, le réservoir 11 et le filtre 13 et les maintenir solidement en place, comme cela est illustré dans la figure 2, tout en assurant l'étanchéité du volume intermédiaire 16 qui sera délimité.

Pour réaliser cette fixation solide du réservoir 11 et du filtre 13 sur le support-filtre 12, l'on pourra recourir à divers moyens, par enfoncement ou vissage.

Optionnellement, afin d'améliorer la stabilité du réservoir 11, ce dernier pourra également être fixé par tout moyen approprié à l'élément de structure 14

S'agissant du filtre 13, ce dernier vient se fixer, comme cela a été décrit précédemment, sur le support-filtre 12 qui est pourvu d'un orifice adapté à ce filtre. Ainsi, l'on pourra changer aisément ce filtre, par exemple par dévissage.

Par ailleurs, l'on voit que le dispositif permet une modularité avantageuse puisqu'il est possible de prévoir plusieurs types de support-filtres 12 de manière à s'adapter à plusieurs modèles de filtre existant sur le marché.

Comme cela a été dit, le support-filtre 12 assure une fonction importante et particulièrement avantageuse, à savoir qu'il permet , comme on le voit sur la figure 2, de délimiter un volume intermédiaire 16 défini par la partie supérieure du filtre 13, la paroi interne 19 de l'élément de structure 14 et les surfaces externes du réservoir 11.

Ce volume intermédiaire 16, délimité lors de la mise en place des divers éléments décrits précédemment, permet de collecter l'eau avant qu'elle ne soit immédiatement traitée par le filtre 13, tandis que l'eau restant au sein du réservoir 11 y demeure sans y être traité.

Ainsi, comme on le voit, l'invention permet de réaliser, de manière très simple et avec un minimum de pièces internes, un système de filtration dans lequel le processus de filtration peut être mis en oeuvre ou stoppé, très simplement, en penchant la bouteille sur la gauche (resp. sur la droite), de manière à provoquer ou non l'écoulement de l'eau depuis le réservoir 11 jusque dans le volume intermédiaire de collecte 16.

Le support filtre 12 assure ainsi trois fonctions distinctes et parfaitement opportunes :
- le maintien en place du réservoir 11 afin que celui-ci reste positionné dans la partie supérieure de la bouteille, comme on le voit dans la figure 2.
- le maintien en place du filtre 13 afin que celui-ci reste également positionné dans la partie supérieure de la bouteille et puisse traiter l'eau recueillie dans le volume interne 16 ;
- la délimitation du volume intermédiaire 16 de collecte de l'eau d'écoulement via l'orifice gauche supérieur 18 du réservoir 11.

Cette disposition parfaitement avantageuse permet donc d'éviter que le filtre 13 ne stagne dans l'eau lors du déplacement de la bouteille. Il permet d'assurer la fonction de filtration de l'eau au moment opportun, choisi, en général juste avant sa consommation.

Dans un mode de réalisation particulier, le support-filtre 12 pourra être fixé sur l'élément de structure 14 à différentes positions prédéfinies - par exemple au moyen d'un jeu de rainures prédéfinies - pour permettre le réglage à souhait de la quantité d'eau filtrée et collectée dans la partie inférieure de l'élément 1.

Dans un mode de réalisation particulier, le support-filtre 12 ou l'élément de structure 14 comporte un système de comptage pour le décompte du nombre d'utilisations du filtre et ainsi faciliter la gestion de ce dernier... Sous sa forme la plus simple, l'on pourra disposer un système de repère visuel pour permettre l'identification de la date de mise en fonction du filtre.

Dans un souci de clarté, l'on illustre à présent les différents flux lors de l'utilisation de la bouteille filtrante de la figure 2.

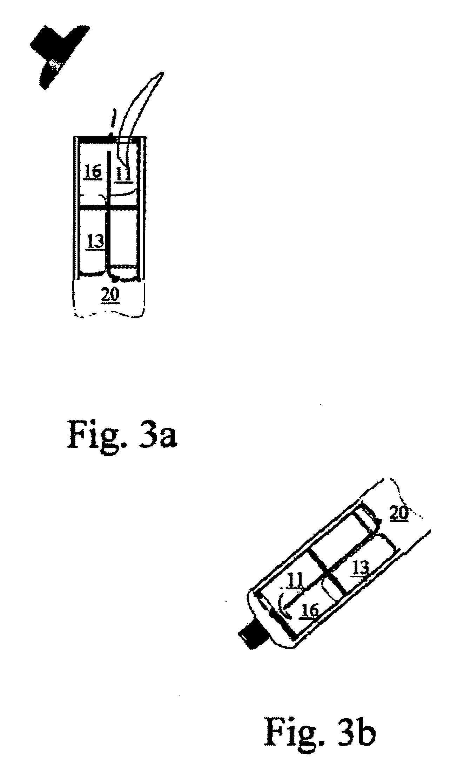

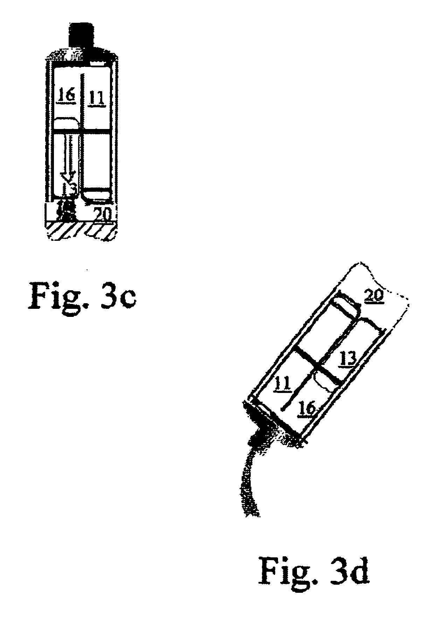

Dans la figure 3a, l'on voit que l'utilisateur vient remplir le réservoir 11 d'eau en attente de filtration. Dans le cas d'une consommation immédiate, l'on pourra remplir complètement les volumes 11 et 16 de manière à traiter un volume maximal d'eau.

Au contraire, dans une utilisation nomade, l'on ne remplira que le volume 11 de manière à pouvoir différer le début du processus de filtration. La bouteille pourra ensuite être transportée jusqu'au lieu de consommation et ce même lors de températures élevées, susceptible de favoriser le développement de bactéries.

En effet, au moment de la consommation, il suffira à l'utilisateur de pencher la bouteille sur la gauche, comme cela est illustré dans la figure 3b,
provoquant ainsi un écoulement via l'orifice 18 d'une partie du liquide contenu dans le réservoir 11, lequel est ensuite collecté dans le volume 16 pour y être filtré par le filtre 13.

La figure 3c illustre ainsi le passage de l'eau au sein du filtre pour y être ensuite collectée dans le volume inférieur 20 de la bouteille.

On notera, et ceci est un avantage particulièrement intéressant de l'invention, qu'il suffit de « pencher » à nouveau la bouteille vers la droite pour venir arrêter la filtration et éviter ainsi que de l'eau filtrée ne stagne au sein du volume 20.

Lorsque l'utilisateur souhaite consommer l'eau filtrée, il lui suffit alors de pencher la bouteille, soit vers la droite (s'il souhaite interrompre la production d'eau filtrée) ou vers la gauche (s'il souhaite poursuivre la production d'eau filtrée), permettant l'écoulement le long du volume délimité par les deux surfaces interne 19 et externe 20 de l'élément de structure 14.

La bouteille filtrante selon l'invention permet ainsi une grande flexibilité et assure une filtration de l'eau « à la demande », c'est à dire au moment de la consommation en préservant l'eau filtrée du développement des bactéries.

Au contraire, les dispositifs connus filtrent l'eau immédiatement et stockent l'eau débarrassée du chlore, favorisant ainsi la prolifération des bactéries.

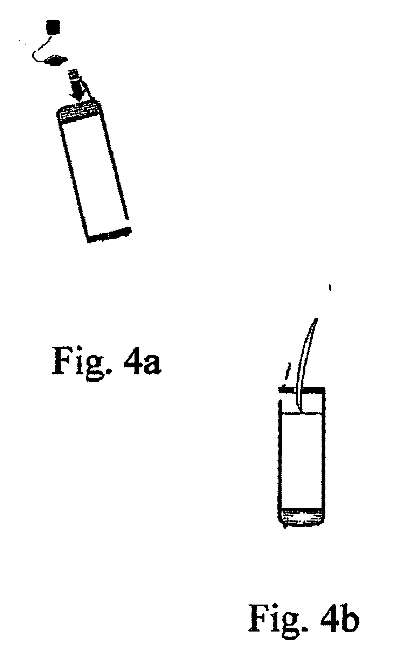

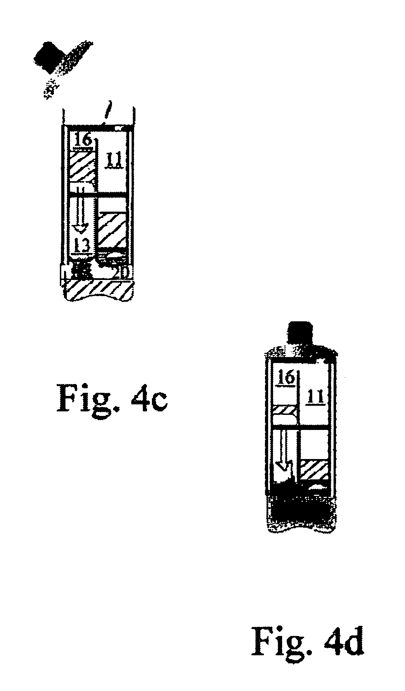

Les figures 4a à 4d illustre le fonctionnement du filtre lors de la préparation de thé ou d'une infusion. Comme on le voit, on dispose dans l'infuseur 15 du thé ou des herbes pour infusion et l'on vient remplir ensuite le réservoir 11 d'eau. En penchant la bouteille vers la gauche, l'on vient provoquer un écoulement de cette eau dans le volume 16, pour y être ensuite filtrée par le filtre 13. Une fois collectée au fond du volume 20, l'eau purifiée peut alors venir immerger la dose de thé contenue dans l'infuseur.

D'une manière générale, le corps de la bouteille pourra être réalisée en matériau plastique transparent de manière à assurer une vision directe de l'écoulement de l'eau purifiée et permettre à l'utilisateur de cesser la production d'eau lorsque le niveau sera suffisant.

L'on a décrit un mode de réalisation de l'invention en relation avec la réalisation d'une bouteille pour un usage nomade. Clairement, il ne s'agit que d'un exemple non limitatif, étant entendu qu'un homme du métier pourra adapter l'invention à la réalisation de tous autres récipients, voire même d'une bouilloire permettant de filtrer, puis de chauffer de l'eau pour une consommation immédiate.

L'invention pourra généralement être utilisée pour la réalisation de tout récipient, tel qu'une carafe, un flacon ou une bonbonne...

De même, le mode de réalisation qui vient d'être décrit montre la commande de la filtration par le fait de venir pencher la bouteille vers la gauche. L'on pourra adapter aisément cette configuration et disposer l'orifice 18 du réservoir 11 sur la droite de manière à provoquer l'écoulement par gravité de l'eau contenue dans le réservoir 11 lorsque l'on penche cette bouteille vers la droite.

## Revendications

1. Dispositif de filtration pour un récipient comportant :
- un récipient comportant un élément inférieur (1) et un élément supérieur (2) doté d'un orifice de vidange (3), l'élément supérieur pouvant être fixé de manière étanche sur l'élément inférieur de manière à constituer un récipient fermé ;
- un dispositif de filtration interne comportant :
- un réservoir (11) comportant une orifice (18) dans sa partie supérieure permettant l'écoulement de son contenu lorsque le récipient est penché vers la gauche ou vers la droite ;
- un filtre (13)
- un support-filtre (12) destiné à recevoir de manière étanche le filtre 13 et le réservoir (11) ;
- un élément de structure (14) coopérant avec le suport-filtre (12) de manière à délimiter un volume intermédian (16) permettant de recueillir le liqude à la suite de récoulement par le dit orifice (18), l'élément de structure (14) comportant en outre un canal d'écoulement du liquide de bas vers le haut ;
Le dit dispositif de filtration interne étant disposé à l'intérieur du récipient de manière à permettre la collecte du liquide filtrée après le passage dans le filtre.

2. Dispositif selon la ravendication 1 **caractérisé en ce que** le réservoir interne (11) comporte en outre un infuseur pour le maintien de thé ou d'herbes à infusion utilisables lors de la collecté d'eau filtrée dans la partie inférieur du récipient.

3. Dispositif selon la revendication 1 ou 2 **caractérisé en ce que** le récipient et l'élément de structure (14) présente une forme cylindrique, le canal d'écoulement de l'élément de structure étant délimité par une double cloison interne (10) et externe (20)

4. Dispositif selon la revendication 3 **caractérisé en ce que** le reservoir (11) et le filtre (13) sont de forme cylindrique et **en ce que** le support-filtre 12 est de forme circulaire adaptée à la section interne de l'élément de structure (14), et présente en deux orifices circulaires permettant respectivement de venir bloquer la tête supérieure du filtre (13) et le corps du réservoir (11), l'ensemble formé par l'élément de structure (14), le support-filtre (12), le filtre (13) et le réservoir (11) délimitant ledit volume intermédiaire (16).

5. Dispositif selon l'une quelconque des revendications précédentes **caractérisé en ce que** le support-filtre (12) peut être disposé à des hauteurs variables prédéfinies.

6. Dispositif selon l'une quelconque des revendications précédentes **caractérisé en ce qu'**il comporte un système de décompte de l'utilisation du filtre.

7. Dispositif selon l'une quelconque des revendications précédentes **caractérisé en ce qu'**il comporte un système de chauffe pour la production d'eau chaude filtrée.

8. Dispositif selon l'une quelconque des revendications précédentes **caractérisé en ce que** ledit récipient présente la forme d'un flacon, d'une carafe ou d'une cannette.

9. Dispositif selon l'une quelconque des revendications précédentes, **caractérisé en ce que** le récipient comporte un élément supérieur qui peut être vissé sur un élément inférieur de manière à présenter, une fois les deux éléments réunis, la forme d'une bouteille.

10. Dispositif selon l'une quelconque des revendications précédentes **caractérisé en ce que** ledit volume intermédiaire (16) est situé à gauche du réservoir (11) en sorte que l'écoulement du contenu du réservoir (11) dans le volume intermédiaire (16) est effectué lorsque le récipient est penché vers la gauche.

## Patentansprüche

1. Filtervorrichtung für einen Behälter, aufweisend:
- einen Behälter, der ein unteres Element (1) und ein oberes Element (2) aufweist, welches mit einer Auslassöffnung (3) versehen ist, wobei das obere Element abdichtend am unteren Element gesichert sein kann, um derart einen geschlossenen Behälter zu bilden;
- eine interne Filtereinrichtung, aufweisend:
- einen Behälter (11), der eine Öffnung (18) an seiner Oberseite aufweist, welche das Ausströmen seines Inhalts ermöglicht, wenn der Behälter zur linken oder rechten Seite geneigt wird;
- ein Filter (13)
- einen Filterhalter (12) zur abdichtenden Aufnahme des Filters (13) und des Behälters (11);
- eine Strukturelement (14), das mit dem Filterhalter (12) zusammenwirkt, um so einen Zwischenraum (16) abzugrenzen, damit es ermöglicht wird, die Flüssigkeit infolge des Abströmens durch besagte Öffnung (18) zu sammeln, wobei das Strukturelement (14) ferner einen Flüssigkeitsabströmkanal von unten nach oben aufweist;
wobei besagte interne Filtereinrichtung innerhalb des Behälters derart angeordnet ist, dass sie das Sammeln der filtrierten Flüssigkeit nach dem Passieren im Filter ermöglicht.

2. Vorrichtung nach Anspruch 1, **dadurch gekennzeichnet, dass** der innere Behälter (11) ferner einen Siebeinsatz zur Aufnahme von Tee oder von Kräutern zum Aufbrühen aufweist, der während des Sammelns des filtrierten Wassers im unteren Teil des Behälters nutzbar ist.

3. Vorrichtung nach Anspruch 1 oder 2, **dadurch gekennzeichnet, dass** der Behälter und das Strukturelement (14) eine zylinderförmige Gestalt haben, wobei der Abströmkanal des Strukturelements durch eine doppelte innere (10) und äußere (20) Trennwand abgegrenzt ist.

4. Vorrichtung nach Anspruch 3, **dadurch gekennzeichnet, dass** der Behälter (11) und das Filter (13) zylinderförmig sind, und dass der Filterhalter (12) von kreisförmiger Gestalt ist, geeignet zur internen Unterteilung des Strukturelements (14) und aufweisend zwei kreisförmige Öffnungen, die jeweils den oberen Kopf des Filters (13) und den Körper des Behälters (11) blockieren, wobei die Anordnung, die durch das Strukturelement (14), den Filterhalter (12), das Filter (13) und den Behälter (11) gebildet wird, den Zwischenraum (16) begrenzt.

5. Vorrichtung nach einem der vorhergehenden Ansprüche, **dadurch gekennzeichnet, dass** der Filterhalter (12) in unterschiedlichen vorgegebenen Höhen angeordnet sein kann.

6. Vorrichtung nach einem der vorhergehenden Ansprüche, **dadurch gekennzeichnet, dass** sie ein System zum Zählen der Filterbenutzungen aufweist.

7. Vorrichtung nach einem der vorhergehenden Ansprüche, **dadurch gekennzeichnet, dass** sie ein Heizsystem zur Erzeugung von heißem, gefiltertem Wasser aufweist.

8. Vorrichtung nach einem der vorhergehenden Ansprüche, **dadurch gekennzeichnet, dass** besagter Behälter die Gestalt einer Flasche, einer Karaffe oder einer Getränkedose aufweist.

9. Vorrichtung nach einem der vorhergehenden Ansprüche, **dadurch gekennzeichnet, dass** der Behälter ein oberes Element aufweist, welches auf ein unteres Element aufschraubbar ist, um, wenn die beiden Elemente verbunden sind, die Gestalt einer Flasche aufzuweisen.

10. Vorrichtung nach einem der vorhergehenden Ansprüche, **dadurch gekennzeichnet, dass** sich besagter Zwischenraum (16) derart links vom Behälter (11) befindet so, dass das Abströmen des Inhalts des Behälters (11) in den Zwischenraum (16) bewirkt wird, sobald der Behälter nach links geneigt wird.

## Claims

1. Filtering device for a container, comprising :
- un container comprising a lower part (1) and an upper part (2) comprising an outlet opening (3), the upper part being water tightly affixed to the bottom element so as to constitute a closed container;
- a internal filtering device comprising:
- a tank (11) having an opening (18) in its top allowing the flow of its contents when the container is tilted to the left or to the right side;
- A filter (13)
- A filter holder (12) adapted to water tightly receive filter 13 and tank (11);
- A structure element (14) cooperating with the filter holder (12) so as to define an intermediate volume (16) for collecting the liquid when the latter flow through said opening (18), the structure element (14) further comprising a liquid flowing conduct bottom to top;
said internal filtering device being located within said container so as to allow the collection of filtered liquid after passing through the filter.

2. Device according to claim 1 **characterized in that** the inner tank (11) further comprises an infuser for maintaining tea or herbal infusions used when collecting the filtered water in the lower part of the container.

3. Device according to claim 1 or 2 **characterized in that** the container and the structure element (14) have a cylindrical shape, the flow conduct of the structure element being delimited by two partitions, both internal (10) and external (20).

4. Device according to claim 3 **characterized in that** the tank (11) and the filter (13) are cylindrical and **in that** the filter-holder 12 has a circular shape adapted to the internal section of the structure element (14), and has two circular openings respectively allowing to block the upper head of filter (13) and the body of the tank (11), the whole assembly formed by the structure element (14), the filter-holder (12), the filter (13) and the tank (11) defining the said intermediate volume (16).

5. Device according to anyone of the preceding claims **characterized in that** the filter holder (12) can be arranged at varying predetermined heights.

6. Device according to anyone of the preceding claims **characterized in that** it comprises a device for counting the usage of the filter.

7. Device according to anyone of the preceding claims **characterized in that** it comprises a heating system for producing hot water filtered.

8. Device according to anyone of the preceding claims **characterized in that** said container has the shape of a bottle, a decanter or a can.

9. Device according to anyone of the preceding claims, **characterized in that** the container comprises an upper element which can be screwed onto a lower element so as to have, once the two elements are combined, the shape of a bottle.

10. Device according to anyone of the preceding claims **characterized in that** the said intermediate volume (16) is located at the left of the tank (11) so that the flow of the contents of the tank (11), within the intermediate volume (16) occurs when the container is tilted on the left.
